# EUROPÄISCHE PATENTSCHRIFT

(11) **EP 3 790 749 B1**
(45) Veröffentlichungstag und Bekanntmachung des Hinweises auf die Patenterteilung: **16.03.2022**
(21) Anmeldenummer: 20715753.8
(22) Anmeldetag: 17.03.2020
(51) Int. Cl.: B60H 1/24, B60H 1/34, F24F 13/14

(54) **AUSSTRÖMER FÜR EIN FAHRZEUG**
AIR OUTLET FOR A MOTOR VEHICLE
DIFFUSEUR D'AIR POUR UN VÉHICULE AUTOMOBILE

(30) Priorität: 03.04.2019 DE 102019108740
(43) Veröffentlichungstag der Anmeldung: 17.03.2021
(73) Patentinhaber: Dr. Schneider Kunststoffwerke GmbH, 96317 Kronach-Neuses (DE)
(72) Erfinder: HOHNBAUM, Klemens, 97052 Euerbach (DE); HASENEY, Martin, 96332 Pressig (DE)
(86) Internationale Anmeldenummer: PCT/EP2020/057299
(87) Internationale Veröffentlichungsnummer: WO 2020/200769

(56) Entgegenhaltungen:
- CN-U- 205 168 111
- DE-A1-102012 022 364
- DE-A1-102016 013 353

## Beschreibung

Die Erfindung betrifft einen Ausströmer für ein Fahrzeug, insbesondere für einen Personenkraftwagen oder ein Nutzfahrzeug, gemäß den Merkmalen des Oberbegriffs des Anspruchs 1.

Ein Ausströmer für ein Fahrzeug ist beispielsweise aus Dokument DE 103 03 114 B3 bekannt. Dort ist ein Ausströmer in einer Instrumententafel eines Fahrzeugs gezeigt. Der Ausströmer weist relativ breite Ausströmöffnungen auf, die im Bereich eines Fensters angeordnet sind, um dieses mit einem Luftstrom zu versorgen und ein Beschlagen des Fensters zu verhindern. Der Ausströmer weist mehrere flexible Lamellen auf, die an der Oberfläche der Instrumententafel angeordnet sind und die Ausströmeröffnungen verschließen bzw. öffnen. Die Lamellen werden über Formgedächtnismaterialien oder über Bimetall-Stellglieder temperaturabhängig bewegt. Ein Nachteil dieser Anordnung liegt darin, dass diese Lamellen nur temperaturabhängig steuerbar sind und eine nur eingegrenzte Steuerung des aus dem Ausströmer austretenden Luftstroms erlauben.

Aus dem Dokument DE 102 44 280 A1 ist ein Luftströmer mit einer gekrümmten Fläche als Ausströmöffnung bekannt. Im geschlossenen Zustand wird diese gekrümmte Ausströmöffnung durch eine Vielzahl von Jalousielamellen verschlossen. Die Jalousielamellen sind um eine mittig verlaufende Drehachse drehbar gelagert und weisen an beiden Enden frei bewegliche Kanten auf. Die Ansteuerung der Jalousielamellen benötigt eine relativ aufwändige Hebelmechanik, die eine gewisse Bauhöhe des Ausströmers benötigt.

Aus dem Dokument DE 10 2004 046 273 A1 ist ebenfalls ein Ausströmer für ein Fahrzeug bekannt, bei dem in der Verschlussstellung die Ausströmeroberfläche vollständig abgedeckt wird. Auch hier werden mehrere Jalousielamellen verwendet, die von einem gemeinsamen Stellglied angetrieben sind. Die Jalousielamellen werden von dem Stellglied gelichsinnig beaufschlagt und bewegen sich alle in derselben Drehrichtung.

Die DE 10 2017 206 464 A1 zeigt einen Luftstromaustritt, der aus zwei hintereinander angeordneten Gehäusen besteht und einen geschlossenen Strömungskanal ausbilden, wobei das erste Gehäuse eine Austrittsöffnung und das zweite Gehäuse eine Eintrittsöffnung definiert. Das zweite Gehäuse weist ferner zwei Schließklappen auf, die einander gegenüberliegend angeordnet sind und jeweils um eine Drehachse drehbar gelagert sind. Die beiden Schließklappen sind derart über einen Zahnradmechanismus miteinander verbunden, dass bei Betätigung eines Reglers die Öffnung der Schließklappen gesteuert werden kann. Im ersten Gehäuse sind vertikale und horizontale Lamellen angeordnet, mit denen die Richtung des ausströmenden Luftstroms beeinflusst werden kann.

In der DE 10 2014 203 511 B3 ist ein Luftausströmer mit einem Gehäuse beschrieben. Auf der Sichtseite des Luftausströmers ist ein Bedienelement angeordnet, mit dem die Luftintensität und die Ausströmrichtung eingestellt werden kann. Zur Einstellung der Ausströmrichtung sind Luftleitelemente vorgesehen, die mit dem Bedienelement mechanisch über eine zweite Kopplung gekoppelt sind. Das Bedienelement ist weiter mechanisch über eine erste Kopplung mit Verschlusselementen gekoppelt. Die zwei Verschlusselemente sind auf der einen Seite starr mit der mittig verlaufenden Achse verbunden.

Die US 2016 / 0 129 762 A1 offenbart einen im wesentlichen kugelförmigen Luftausströmer, der ein Gehäuse und zwei halbkugelförmige Auslasskomponenten umfasst. Jede der Auslasskomponenten weist eine, im Wesentlichen in Form eines Kugelsegments ausgestaltete, Blende und eine Vielzahl von parallel angeordneten Lamellen auf. Die beiden Auslasskomponenten sind derart angeordnet, dass sie zusammen eine Kugel ausbilden und die beiden Blenden über Zahnräder mechanisch miteinander gekoppelt sind. Dies ermöglicht ein Öffnen und Schließen der Blende. Die beiden halbkugelförmigen Auslasskomponenten sind in dem Gehäuse rotatorisch gelagert, wodurch die Ausströmrichtung verändert werden kann.

Die US 5188 561 A zeigt einen Luftausströmer mit einem Gehäuse und zwei Blenden, die im Wesentlichen in Form eines Zylindersektors ausgeführt sind. Weiter umfasst der Luftausströmer Lamellen, die die Richtung der ausströmenden Luft vorgeben. Die beiden Blenden teilen sich eine gemeinsame Achse, um welche die Blenden drehbar gelagert sind. Die Blenden sind mechanisch mit einem Magnetschalter gekoppelt, der die Blenden öffnet und schließt. Beim Öffnen der Blenden bewegen sich die Blenden in das Gehäuse hinein und beim Schließen bewegen sich die Blenden aus dem Gehäuse heraus.

In der US 5 752 877 A ist ein ausklappbarer Luftausströmer beschrieben. Dieser wird vorzugsweise in einem Fahrzeugcockpit eingesetzt und schließt im geschlossenen Zustand bündig mit der Cockpitoberfläche ab. Der Luftausströmer weist im Wesentlichen mehrere Lamellen auf, die beweglich gelagert und mittels eines Bedienelements verstellbar sind, um die Ausströmrichtung des Luftstroms anzupassen.

In der DE 10 2016 013 353 A1 ist ein Ausströmer mit einer ersten und einer zweiten Lamellenanordnung beschrieben, der von einer Eintrittsöffnung zu einer Austrittsöffnung hin mit Luft durchströmt wird. Die erste Lamellenanordnung ist im Bereich der Austrittsöffnung angeordnet und die zweite Lamellenanordnung in Luftströmungsrichtung davor. Jede Lamellenanordnung besteht aus mindestens zwei schwenkbaren Lamellen, deren parallel zueinander angeordnete Drehachsen im Gehäuse gelagert sind. Dies dient einerseits dem Zweck der Einstellbarkeit der Luftströmungsrichtung aus dem Ausströmer, andererseits sind die Lamellen der ersten oder der zweiten Lamellenanordnung derart verstellbar, dass diese den Ausströmer vollständig verschließen können.

Die DE 10 2012 022 364 A1 zeigt einen Ausströmer mit einer Lamellenanordnung aus mindestens zwei Lamellen, die den Strömungsquerschnitt des Ausströmers wahlweise blockieren oder freigeben können. Die Lamellen sind hierbei von einer ersten Schließstellung über eine Öffnungsstellung in eine zweite Schließstellung überführbar. In den Schließstellungen überdecken sich die Profilendabschnitte benachbarter Lamellen, um eine Dichtung zu gewährleisten.

Die CN 205 168 111 U offenbart einen Ausströmer mit die Ausstrittsöffnung des Ausströmers verschließbaren Lamellen. Die Lamellen sind über parallele Drehachsen im Bereich der Austrittsöffnung schwenkbar in einem um die Ausströmerlängsachse drehbaren Ring angeordnet und können von einer Verschlussstellung über verschiedene Zwischenstellungen bis in eine maximal geöffnete Stellung überführt werden, in welcher die Lamellen in etwa um 90° gedreht zur Verschlussposition verschwenkt werden können. In der Verschlussstellung liegen die Lamellen nahezu parallel und flach nebeneinander und überlappen sich im Bereich der benachbarten Schließkanten, um eine geschlossene Oberfläche zu bilden. Die Ring, in dem die Lamellen gelagert sind, ermöglicht eine Verstellung der schwenkbaren Lamellen um die Ausströmerlängsachse, wodurch der Luftstrom auch in eine beliebige Richtung gestellt werden kann.

Es ist die Aufgabe der vorliegenden Erfindung, einen Ausströmer für ein Fahrzeug zu schaffen, der bei einer möglichst geringen Einbau- und Öffnungshöhe, eine möglichst gute und effiziente Beeinflussung des auftretenden Luftstroms ermöglicht. Gleichzeitig soll der Ausströmer konstruktiv einfach aufgebaut sein und eine optisch ansprechende Oberfläche bzw. eine dezente, im Sinne einer unauffälligen, Optik aufweisen.

Diese Aufgabe wird erfindungsgemäß durch einen Ausströmer für ein Fahrzeug, mit den Merkmalen des unabhängigen Anspruchs 1 gelöst.

Vorteilhafte Ausgestaltungen der Erfindung ergeben sich aus den Unteransprüchen.

Insbesondere weist jede der wenigstens zwei Lamellen eine mit dem Gehäuse verbundene Lagerkante auf. Durch diese dem Gehäuse verbundene Lagerkante kann ein optisch ansprechender Übergang von der Lamelle zu dem Gehäuse bzw. zu einem, an das Gehäuse anschließende oder das Gehäuse umgebenden Verkleidungsteil realisiert werden. In der Verschlussstellung des Ausströmers, also in der Stellung in der möglichst wenig oder kein Luftaustritt aus dem Ausströmer erfolgt, ist die Ausstromeröffnung durch die wenigstens zwei Lamellen verschlossen. Die wenigstens zwei Lamellen sind in der Ausströmeröffnung derart angeordnet, dass diese die sichtbare Außenfläche des Ausströmers bilden. Insbesondere sind die Lamellen, und damit die Außenfläche, fluchtend mit einem das Ausströmergehäuse umgebendem Verkleidungsteil oder mit einem an das Ausströmergehäuse anschließenden Verkleidungsteil ausgebildet.

**Erfindungsgemäβ** ist vorgesehen, dass die Schließkanten der Lamellen als frei bewegliche Schließkanten ausgebildet sind. Insbesondere ist die Lagerkante einer Lamelle relativ zu dem Gehäuse im Wesentlichen ortsfest. D. h. die Lagerkante kann nicht von dem Gehäuse abgehoben oder von dem Gehäuse weggeschwenkt werden. Beispielsweise kann die Lagekante mit dem Gehäuse verbunden sein, vorzugsweise über ein Drehlager oder ein Filmscharnier. Insbesondere ist die Lagerkante mit dem Gehäuse weitestgehend luftdicht verbunden, so dass ein Luftaustritt hauptsächlich im Bereich der Schließkante erfolgt.

**Erfindungsgemäβ** liegen in der Verschlussstellung die Schließkanten der wenigstens zwei Lamellen in der Ausströmeröffnung einander gegenüber, oder vorzugsweise unmittelbar gegenüber. Insbesondere weisen die beiden Schließkanten einen relativ geringen Abstand zueinander auf. Der Abstand kann beispielsweise im Bereich von 0,1 mm bis 3 mm liegen, vorzugsweise in einem Bereich von 0,2 mm bis 1,5 mm liegen. Dadurch wird in der Verschlussstellung des Ausströmers der optische Eindruck einer geschlossenen Oberfläche erzielt. Gleichzeitig wird der Ausströmer durch die Lamellen in der Verschlussstellung möglichst dicht verschlossen, sodass ein Luftaustritt aus dem Ausströmer in der Verschlussstellung weitestgehend unterbunden wird.

Optional kann im Gehäuseschacht, vorzugweise hinter dem Lufteinlass, eine Schließklappe angeordnet sein, um den Volumenstrom einstellbar zu machen. Eine solche Schließklappe bietet zudem die Möglichkeit, unabhängig von der Stellung der Schließkanten der wenigstens zwei Lamellen, den Volumenstrom abzustellen.

Um die optische Anmutung des Ausströmers weiter zu verbessern, kann in einer Ausgestaltung vorgesehen sein, dass die Außenflächen der wenigstens zwei Lamellen in der Verschlussstellung miteinander fluchten, vorzugsweise gemeinsam eine in der Verschlussstellung im Wesentlichen geschlossene Außenfläche ausbilden. Durch die in der Verschlussstellung miteinander fluchtenden Oberflächen der Lamellen, die insbesondere jedenfalls mit einer Oberfläche eines die Lamellen bzw. das Gehäuse umgebenden Verkleidungsteils fluchtend angeordnet sind, wird ein optisch einheitlicher Eindruck erzielt. Somit lässt sich der Ausströmer in ein Verkleidungsteil derart integrieren, dass zumindest bei geschlossenem Ausströmer eine einheitliche Oberfläche erscheint. Lediglich zwischen den gegenüberliegenden Schließkanten ist ein kleiner, optisch unauffälliger Spalt vorhanden. Die Außenfläche der Lamellen bzw. des Ausströmers kann gekrümmt ausgebildet sein. Beispielsweise kann die Krümmung der Außenseite an eine Oberflächenkontur eines den Ausströmer umgebenden Verkleidungsteils angepasst sein.

Erfindungsgemäß ist vorgesehen, dass die Schließkanten der wenigstens zwei Lamellen zum Öffnen, d. h. ausgehend von der Verschlussstellung in eine Öffnungsstellung, gegenläufig angetrieben sind. Gegenläufig angetrieben bedeutet hier, dass ausgehend von der Verschlussstellung, sich die Schließkanten beider Lamellen in jeweils unterschiedlicher Richtung bewegen, vorzugsweise synchron in jeweils unterschiedlicher Richtung bewegen. D.h. die Schließkante einer Lamelle öffnet beispielsweise nach außen, also aus der Aussströmeröffnung heraus und gleichzeitig öffnet die Schließkante der gegenüberliegenden Lamelle nach innen, also in das Gehäuse des Ausströmers hinein. Durch diese Art der gegensinnig angetriebenen Schließkanten entsteht bei einem relativ geringen Öffnungshub ein relativ breiter Spalt. Dadurch wird die erforderliche Öffnungshöhe reduziert und der für den Luftaustritt erforderliche Querschnitt realisiert. Außerdem lässt sich durch eine Variation in der Öffnungsweite, d.h. in der Breite des zwischen den beiden Schließkanten der wenigstens zwei Lamellen entstehenden Öffnungsspalts, der Volumenstrom der austretenden Luft auf einfache Art und Weise beeinflussen. Ferner erfolgt mit der zunehmenden Öffnung der beiden gegensinnig bewegten Lamellen eine Veränderung des Austrittswinkels des austretenden Luftstroms. Dadurch wird zudem eine effiziente Beeinflussung des Austrittswinkels des Luftstroms ermöglicht. Zudem kann, entsprechend der Länge der Schließkanten, der Spalt entsprechend dimensioniert werden und ermöglicht so eine teildiffuse Ausströmung des Luftstromes.

Insbesondere ermöglicht der erfindungsgemäße Ausströmer einen flachen Ausströmwinkel des Luftstromes. Über diesen flachen Ausströmwinkel ist es beispielsweise möglich, auf effiziente Art und Weise großflächige Bereiche, wie beispielsweise die Fenster eines Kraftfahrzeugs zu belüften und beschlagfrei zu halten. Zudem stellt die teildiffuse Ausströmung ein Komfortmerkmal dar, da ein fokussierter Luftstrom vermieden wird, welcher von den Insassen oftmals als unkomfortabel empfunden wird.

Eine Ansteuerung der wenigstens zwei Lamellen kann in einer Ausgestaltung beispielsweise dadurch erfolgen, dass jede der wenigstens zwei Lamellen mit jeweils einem Aktor, vorzugsweise einem Stellmotor oder einem Hubzylinder, verbunden ist und die wenigstens zwei Aktoren derart von einer Steuereinrichtung angesteuert sind, dass die Schließkanten der wenigstens zwei Lamellen gegensinnig bewegt werden.

Vorzugsweise sind die Lamellen des Ausströmers manuell und/oder automatisch angetrieben betätigbar.

In einer Ausgestaltung kann vorgesehen sein, dass das Stellglied oder die mehreren Stellglieder im Querschnitt zumindest abschnittsweise bügelförmig oder U-förmig oder C-förmig oder halbkreisförmig ausgebildet ist bzw. sind.

In einer konstruktiv einfach zu realisierenden Variante kann beispielsweise vorgesehen sein, dass das Stellglied oder dass die mehreren Stellglieder in einem Drehlager oder mehreren Drehlagern des Gehäuses drehbar gelagert ist bzw. sind, und dass das Stellglied mit beiden Lamellen verschiebbar verbunden ist oder dass Einstellglied jeweils mit beiden Lamellen verschiebbar verbunden ist.

Alternativ dazu kann beispielsweise vorgesehen sein, dass das Stellglied oder dass die mehreren Stellglieder in einem Gleitlager oder in mehreren Gleitlagern des Gehäuses drehbar gelagert ist bzw. sind, und dass das Stellglied mit beiden Lamellen drehbar verbunden ist oder dass Einstellglied jeweils mit beiden Lamellen drehbar verbunden ist.

Um die Steuerung des Luftaustritts weiter zu verbessern, kann beispielsweise in einer Ausgestaltung vorgesehen sein, dass die mehreren Stellglieder als V-Lamellen zum Steuern einer Luftaustrittsrichtung ausgebildet sind, indem diese relativ zu den wenigstens zwei Lamellen schwenkbar gelagert sind.

V-Lamellen dienen insbesondere zur Beeinflussung der Luftaustrittsrichtung des Luftstroms in eine zu der Hauptaustrittsrichtung senkrecht verlaufende zweite Richtung. Insbesondere ist dazu vorgesehen, dass die V-Lamellen als quer zu der Längserstreckung des Öffnungsspaltes zwischen den beiden freien Schließkanten der wenigstens zwei Lamellen angeordnet und schwenkbar gelagert sind. Durch das Schwenken der V-Lamellen ist es möglich die Luftaustrittsrichtung in Längsrichtung des Luftspaltes zu beeinflussen.

In einer konstruktiven Ausgestaltung kann beispielsweise vorgesehen sein, dass das Stellglied als eine Stellwalze ausgebildet ist, die mit beiden Lamellen verbunden ist. Insbesondere kann die Stellwalze in Form eines Halbzylinders ausgebildet sein und sich längs entlang der Lamelle erstrecken, insbesondere entlang einer Schließkante der Lamelle erstrecken.

Um eine möglichst geringe Drosselung des auftretenden Luftstroms zu ermöglichen, kann beispielsweise vorgesehen sein, dass die Stellwalze teilweise durchbrochen ausbildet ist, insbesondere eine Gitterstruktur aufweist.

Vorzugsweise kann vorgesehen sein, dass die Stellwalze wenigstens zwei halbkreisförmige Bügel aufweist, die jeweils an ihrem freien Ende mit einer der wenigstens zwei Lamellen verbunden sind, vorzugsweise drehbar verbunden sind und im Bereich der halbkreisförmigen Krümmung in einem am Gehäuse angeordneten Gleitlager verschiebbar gelagert sind.

Dabei können die wenigstens zwei halbkreisförmigen Bügel im Bereich ihrer freien Enden durch zwei parallele Stege untereinander verbunden sein, wobei je einer der Stege mit einer der wenigstens zwei Lamellen verbunden ist, um diese zu betätigen.

Vorzugsweise kann in einer konstruktiven Ausgestaltung vorgesehen sein, dass die wenigstens zwei Lamellen als starre Lamellen ausgebildet sind, die im Bereich ihrer Lagerkante mit dem Gehäuse drehbar verbunden sind, vorzugsweise dass die Lagerkante jeweils eine Drehachse der Lamelle ausbildet.

Alternativ dazu kann in einer konstruktiven Ausgestaltung vorgesehen sein, dass die wenigstens zwei Lamellen als elastische und/oder biegsame Lamellen ausgebildet sind.

Weiter ist auch denkbar, dass die wenigstens zwei Lamellen jeweils mehrere miteinander drehbar verbundene, in sich starre Abschnitte aufweisen, vorzugsweise dass die starren Abschnitte über Filmscharniere miteinander verbunden sind, oder dass die starren Abschnitte über eine diese abdeckende flexible Bespannung aus einer Folie oder einem Textilstoff verbunden sind.

Vorzugsweise kann vorgesehen sein, dass die Schließkanten und die Lagerkanten einer Lamelle oder aller Lamellen im Wesentlichen parallel zueinander verlaufen. Im Wesentlichen parallel zueinander verlaufen bedeutet in diesem Zusammenhang, dass zumindest abschnittsweise über mehr als 50 % der Längserstreckung der Lagerkanten, insbesondere über mehr als 70 % der Längserstreckung der Lagerkanten, die Schließkanten und Lagerkanten parallel zueinander verlaufen.

Die Kontur der Schließkanten kann beispielsweise geradlinig ausgestaltet sein. Alternativ oder ergänzend kann die Kontur der Schließkanten auch gekrümmte Abschnitte aufweisen oder gekrümmt ausgebildet sein. Auch eine mäanderförmige oder zickzack förmige Kontur der Schließkanten ist denkbar.

Ein Verlauf der Schließkanten im Sinne eines parallel zu den Lagerkanten erfolgenden Verlaufs, wird im Falle von mäanderförmig oder zickzack förmig ausgebildeten Schließkanten dadurch bestimmt, dass der mäanderförmige oder zickzack förmige Verlauf der Schließkanten durch eine Gerade angenähert wird, wobei dann diese Gerade parallel zu der Lagerkante oder Drehachse der Lamelle verläuft.

Vorzugsweise kann auch vorgesehen sein, dass die Drehachsen der wenigstens zwei Lamellen im Wesentlichen parallel zu den Schließkanten der wenigstens zwei Lamellen verlaufen.

Es sind auch Ausgestaltungen des Ausströmers denkbar, bei denen mehrere Lamellen nebeneinander angeordnet sind. Auch eine Hintereinanderschaltung von Lamellen ist denkbar. Beispielsweise indem eine Lamelle mehrere, durch Spalten oder Schnitte voneinander zumindest abschnittsweise getrennte Lamellenabschnitte aufweist. Die Lamellenabschnitte können untereinander elastisch verbunden sein und/oder jeweils einzeln über die Stellwalze oder das Stellglied oder die mehreren Stellglieder betätigbar sein. Eine besonders effiziente Beeinflussung des austretenden Luftstroms ergibt sich, wenn hierbei vorzugsweise vorgesehen ist, dass die Lamellenabschnitte einer Lamelle durch die Stellwalze oder das Stellglied oder die mehreren Stellglieder derart beaufschlagt werden, dass die Öffnungen der mehreren Lamellenabschnitte einer Lamelle in einer Öffnungsstellung untereinander ein Verhältnis beispielsweise entsprechend einer Fibonacci-Reihe bilden.

Beispielsweise kann in einem Anwendungsfall vorgesehen sein, dass der erfindungsgemäße Ausströmer gemäß einem der beschriebenen Ausführungsbeispiele in einem Verkleidungsteil eines Kraftfahrzeugs ausgenommen ist. Das Verkleidungsteil kann beispielsweise ein Mittelkonsole oder eine Instrumententafel oder eine Türverkleidung oder eine Abdeckung einer B-Säule eines Kraftfahrzeugs oder ein Himmel eines Kraftfahrzeugs sein.

Von Vorteil ist, wenn der erfindungsgemäße Ausströmer im Bereich eines Fensters eines Kraftfahrzeugs verwendet wird, um dieses Fenster zu belüften bzw. beschlagfrei zu halten. Dazu kann vorgesehen sein, dass das Verkleidungsteil im Bereich eines Fensters angeordnet und derart ausgebildet ist, dass es eine von dem Ausströmer zu dem Fenster derart gekrümmt verlaufende Oberfläche aufweist, dass ein aus dem Ausströmer austretender Luftstrom entlang der gekrümmt verlaufenden Oberfläche zu dem Fenster geführt wird, vorzugsweise aufgrund des Coand 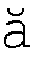 -Effekts entlang der gekrümmt verlaufenden Oberfläche zu dem Fenster geführt wird.

Der Coand 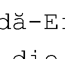 -Effekt beschreibt u.a. das Phänomen, dass fluide Strömung die Tendenz besitzen, entlang einer konvexen Oberfläche ablenkt zu werden, anstatt sich abzulösen und sich in der ursprünglichen Fließrichtung weiter zu bewegen. Vorteilhafterweise kann hier der flache Ausströmwinkel des erfindungsgemäßen Ausströmers genutzt werden, um infolge der flachen Anströmung eines Verkleidungsteils, den austretenden Luftstrom entlang dieses Verkleidungsteils zu einem Fenster zu leiten. Das Verkleidungsteil kann hierzu eine konvexe Oberfläche aufweisen.

Eine praktische Anwendung des erfindungsgemäßen Ausströmers kann in Verbindung mit Luftförder-Anlagen und/oder Heizungsanlagen und/oder Heiz- und Klimaanlagen erfolgen.

Weitere Ausgestaltungen des Ausströmers sind in den Figuren beispielhaft gezeigt und in der nachfolgenden Figurenbeschreibung beschrieben.

Dabei zeigen:
- Fig. 1:: eine dreidimensionale Darstellung eines möglichen Ausführungsbeispiels des erfindungsgemäßen Ausströmers in Verschlussstellung;
- Fig. 2:: eine schematische Darstellung des Aufbaus des Ausströmers aus Fig. 1;
- Fig. 3:: den Ausströmer aus Fig. 1 in einer Offenstellung;
- Fig. 4:: eine schematische Darstellung der Funktionsweise des Ausströmers aus Fig. 2;
- Fig. 5:: eine Explosionsdarstellung des in den Figuren 1 bis 4 dargestellten Ausströmers;
- Fig. 6:: ein alternatives Ausführungsbeispiel des erfindungsgemäßen Ausströmers mit geschlitzten Lamellen;
- Fig. 7:: eine Explosionsdarstellung des Ausströmers aus Fig. 6;
- Fig. 8:: ein Anwendungsbeispiel des erfindungsgemäßen Ausströmers an einer B-Säule eines Kraftfahrzeugs;
- Fig. 9:: eine schematische Explosionszeichnung des Ausströmers an einer B-Säule eines Kraftfahrzeugs;

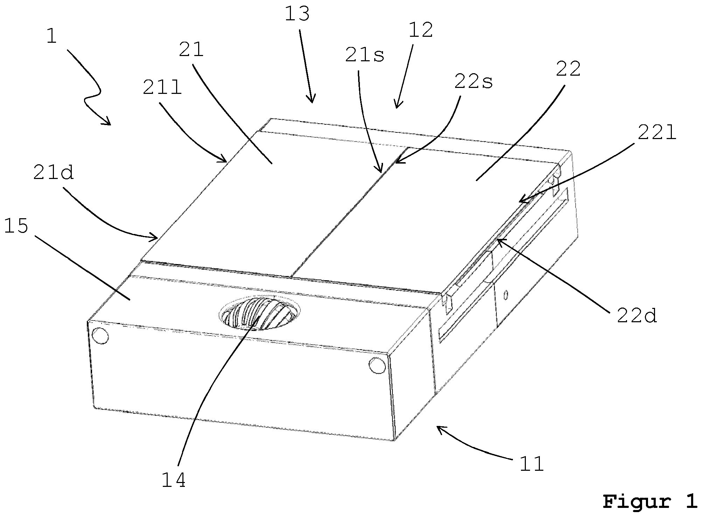

In den Figuren 1 bis 9 sind beispielhafte Ausgestaltungen des erfindungsgemäßen Ausströmers 1 gezeigt. Diese Ausgestaltungen stellen mögliche praktische Anwendungen und konstruktive Umsetzungen des erfindungsgemäßen Ausströmers dar und sollen lediglich beispielhaft und nicht einschränkend verstanden werden. In den Figuren sind jeweils gleiche Bauteile mit gleichen Referenzzeichen versehen.

In den Figuren 1 bis 5 ist ein erstes Ausführungsbeispiel des erfindungsgemäßen Ausströmer gezeigt. Der erfindungsgemäße Ausströmer 1 weist ein Gehäuse 11 auf. Das Gehäuse 11 ist als ein geschlossenes Gehäuse ausgebildet, welches einen Bauraum umschließt. Das Gehäuse 11 weist einen Lufteinlass 19 auf, an dem ein Luftkanal 18 anschließbar ist. Das Gehäuse 11 weist an seiner Oberfläche eine Ausströmeröffnung 12 auf, in der zwei Lamellen 21, 22 angeordnet sind und in dem Bereich der Ausströmeröffnung 12 eine Außenfläche 13 des Gehäuses bilden.

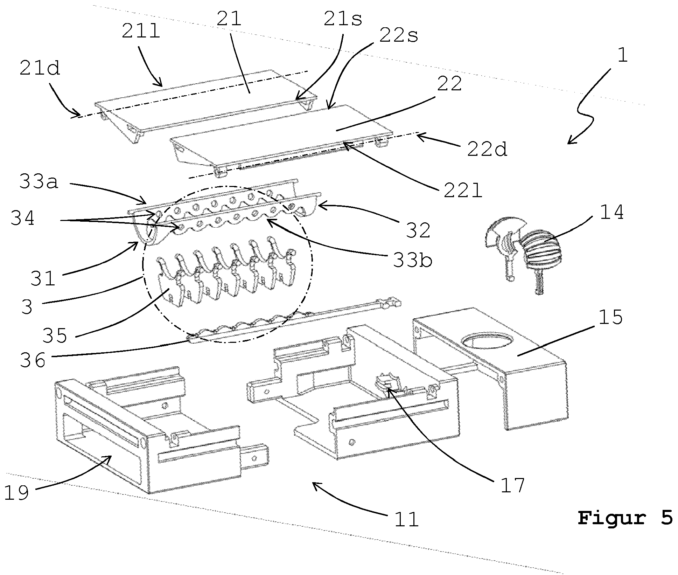

Die Lamellen 21 bzw. 22 sind im Wesentlichen rechteckig ausgebildet und weisen jeweils eine Lagerkante 21l bzw. 22l auf. Im Bereich ihrer Lagerkante 21l bzw. 22l sind die beiden Lamellen 21 und 22 mit dem Gehäuse 11 des Ausströmers 1 drehbar verbunden. Wie in Figur 5 zu sehen ist, ist im Bereich der ersten Lagerkante 21l eine erste Drehachse 21d angeordnet. Entsprechend ist im Bereich der zweiten Lagerkante 22l eine zweite Drehachse 22d angeordnet. Über eine Betätigungshandhabe 14 bzw. ein Bedienrad 14 können die Lamellen 21 und 22 betätigt werden. Das Bedienrad 14 ist seitlich neben den Lamellen in dem Gehäuse 11 angeordnet und durch eine Abdeckung 15 zumindest teilweise abgedeckt. Die Abdeckung 15 weist eine Aussparung auf, durch welche hindurch das Betätigungsrad 14 manuell betätigbar ist.

Alternativ und/oder ergänzend zu dem manuell betätigbaren Betätigungsrad 14 kann ein Stellmotor vorgesehen sein, welcher das Betätigungsrad 14 dreht und eine motorische bzw. automatische Betätigung des Ausströmers ermöglicht.

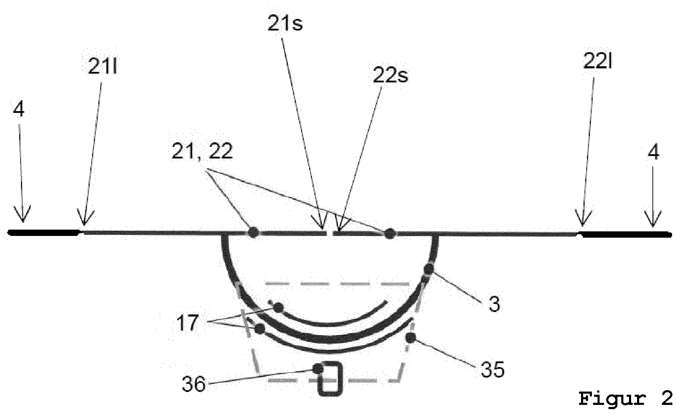

Jeder der Lamellen 21 bzw. 22 weist neben der Lagerkante 21l bzw. 22l eine frei bewegliche Schließkante 21s bzw. 22s auf. Wie in den Figuren 1 und 2 dargestellt liegen die beiden Schließkanten 21s und 22s in der Verschlussstellung einander unmittelbar gegenüber. Zwischen den beiden Schließkanten 21s und 22s ist lediglich ein relativ schmaler Spalt vorhanden.

Gemäß der Darstellung in der Figur 2 ist innerhalb des Gehäuses 11 ein Stellglied angeordnet, um die beiden Lamellen 21 und 22 zu betätigen. Das Stellglied ist als Stellwalze 3 ausgebildet. Die Stellwalze 3 weist eine Form eines Halbzylinders auf. Im Bereich ihrer freien Enden ist die Stellwalze 3 jeweils mit einer der Lamellen 21 oder 22 drehbar verbunden. Im Bereich ihrer halbkreisförmigen Krümmung ist die Stellwalze 3 in einem Gleitlager 17 des Gehäuses 11 verschiebbar gelagert.

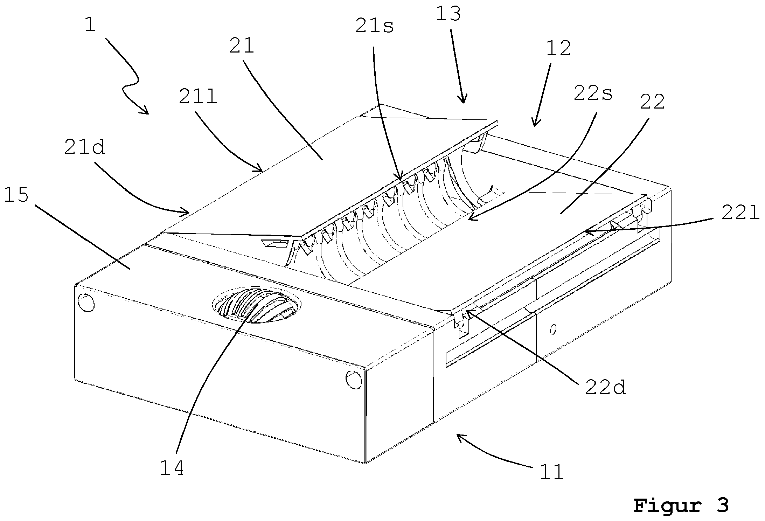

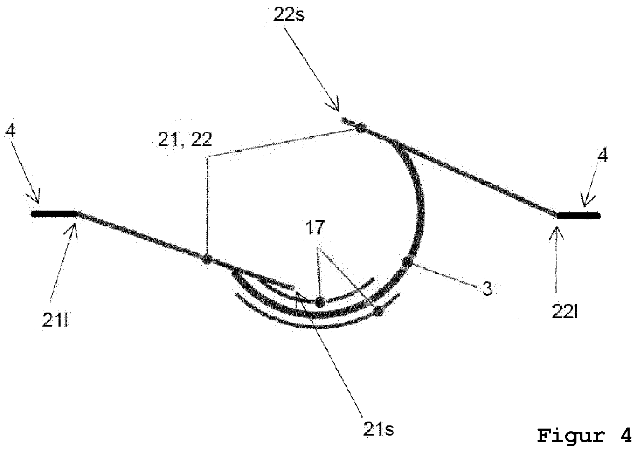

Eine Betätigung der Lamellen 21, 22 ist gemäß der Darstellung in den Figuren 3 bzw. 4 ersichtlich. Bei einer Drehung der Stellwalze 3 wird diese in dem Gleitlager 17 verschoben. Es erfolgt dadurch eine Drehung der Stellwalze 3 um eine Drehachse, die im Bereich der Schließkanten 21s und 22s liegt. Dabei wird eine Lamelle der Lamellen 21 und 22 abgesenkt, d.h. in das Gehäuseinnere 11 gezogen. Die andere Lamelle wird nach außen aus dem Gehäuse ausgestellt. Es entsteht zwischen den Schließkanten 21s und 22s der Lamellen ein Öffnungsspalt, der entweder gemäß der Darstellung in Figur 3 nach rechts oder gemäß der Darstellung in Figur 4 nach links geöffnet ist. Aus diesem Öffnungsspalt kann ein Luftstrom austreten.

Je weiter die Stellwalze 3 gedreht wird, desto größer wird der zwischen den Schließkanten 21s bzw. 22s entstehende Öffnungsspalt. Gleichzeitig verändert sich der Winkel der Lamellen 21, 22, wie aus der Darstellung der Figur 4 zu entnehmen ist. Bei einem relativ schmalen Öffnungsspalt werden die Lamellen 21 und 22 nur wenig aus ihrer Verschlussebene abgelenkt. Dies bedeutet, dass der Luftaustritt in diesem Falle relativ flach ist. Je weiter die Stellwalze 3 betätigt und damit der Spalt geöffnet wird, desto größer wird der Winkel um den die beiden Lamellen 21 bzw. 22 ausgestellt werden und desto steiler erfolgt der Luftaustritt.

Wie in den Figuren 2 und 4 angedeutet ist, ist der erfindungsgemäße Ausströmer 1 in einem Verkleidungsteil 4 aufgenommen und im Bereich der Lagerkanten 21l bzw. 22l erfolgt ein nahezu nahtloser Anschluss des Verkleidungsteils 4 an die Lamellen 21 bzw. 22. Dadurch ergibt sich eine optisch ansprechende Integration des Ausströmers 1 in ein Verkleidungsteil 4.

Der Aufbau des Betätigungsmechanismus mit der Stellwalze 3 ist aus der Explosionsdarstellung der Figur 5 offensichtlich. Die Stellwalze 3 ist als halbzylinderförmige Stellwalze ausgebildet. Die Stellwalze 3 weist einen ersten halbkreisförmigen Bügel 31 und einen zweiten, von diesem beabstandet angeordneten zweiten halbkreisförmigen Bügel 32 auf. Die freien Enden der beiden Bügel 31 und 32 sind durch zwei parallele Stege 33a und 33b untereinander verbunden. Jeder dieser Stege 33a, 33b ist dabei drehbar mit einer der Lamellen 21 bzw. 22 verbunden um diese zu betätigen. Der Steg 33a ist drehbar mit der Lamelle 21 verbunden und der Steg 33b ist mit der Lamelle 22 drehbar verbunden.

Weiter weist die Stellwalze 3 bzw. weist jeder der Stege 33a und 33b mehrere Aufnahmen 34 auf, in denen mehrere V-Lamellen 35 schwenkbar aufgenommen sind. Die V-Lamellen 35 sind an ihrer Unterseite über ein gemeinsames Betätigungselement 36 miteinander verbunden. Über das gemeinsame Betätigungselement 36 können die V-lamellen parallel zueinander verschwenkt werden, um die Luftaustrittsrichtung quer zu der Längserstreckung des Austrittsspaltes des Ausströmers 1 zu beeinflussen.

Die Lamellen 21 und 22 sind gegenläufig beweglich gelagert. D.h. wenn sich die eine Lamelle 21 oder 22 in das Gehäuseinnere hineinbewegt, bewegt sich gleichzeitig, insbesondere synchron, die zweite Lamelle 22 oder 21 aus dem Gehäuse 11 heraus. Durch die halbkreisförmige Ausbildung der Stellwalze 3, lässt sich diese Art der gegenläufigen Ansteuerung der Lamellen 21 und 22 auf einfache Art und Weise bewerkstelligen.

Die Stellwalze 3 ist im Bereich ihrer Krümmung in dem Gleitlager 17 des Gehäuses verschiebbar aufgenommen. Die Stellwalze 3 ist derart gelagert, dass sie sich beim Verschieben um einen Drehpunkt dreht, der in einem Bereich liegt, der mit der Position der Schließkanten 21s und 22s in der Verschlussstellung übereinstimmt. Die Schließkanten 21s und 22s liegen in der Verschlussstellung im Bereich des Drehpunktes des Stellgliedes 3 bzw. der Stellwalze 3.

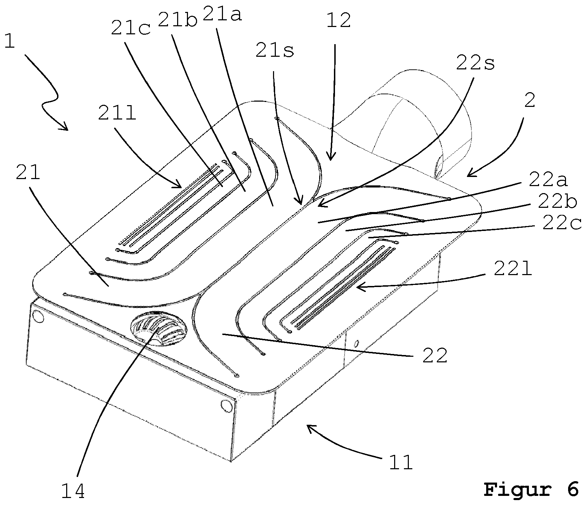

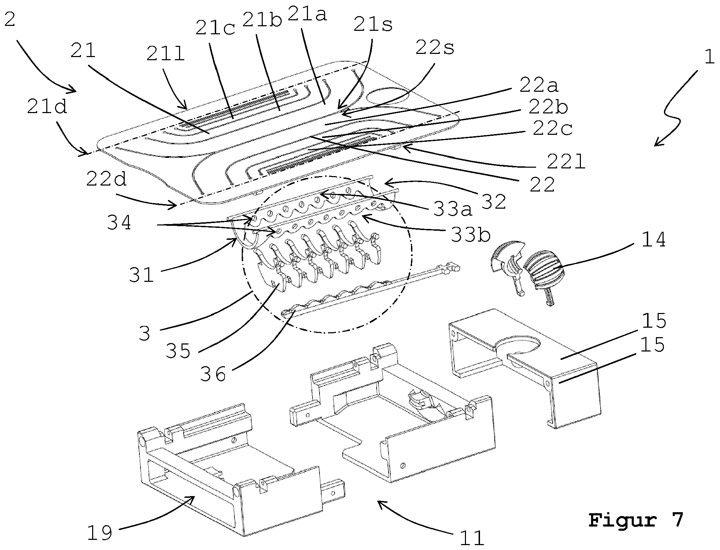

In dem in den Figuren 6 und 7 dargestellten Ausführungsbeispiel ist im Gegensatz zu dem in den Figuren 1 bis 4 dargestellten Ausführungsbeispiel mit starren Lamellen, eine Lamellenanordnung 2 mit flexiblen Lamellen 21 bzw. 22 gezeigt. Die Lamellenanordnung 2 ist aus einem flexiblen bzw. elastischen Material ausgebildet und deckt die Ausströmeröffnung 12 des Gehäuses 11 ab. Die Lamellen 21 bzw. 22 sind aus dem flexiblen Material durch Schnitte herausgebildet. Die Lamellen 21 und 22 liegen sich gegenüber und weisen zwei unmittelbar aneinanderliegende Schließkanten 21s, 22s auf. Die Schließkanten 21s und 22s erstrecken sich im Wesentlichen, d.h. über den größten Teil ihrer Länge parallel zu den Lagerkanten 21l bzw. 22l, mit denen die Lamellen 21 bzw., 22 mit dem Gehäuse 11 verbunden sind. Jeder der Lamellen weist mehrere untereinander geschaltete Lamellenelemente 21a, 21b und 21c bzw. im Falle der Lamelle 22, 22a, 22b, 22c, auf. Die Lamellenabschnitte 21a, 21b, 21c bzw. 22a, 22b, 22c sind durch Schnitt in den Lamellen 21 bzw. 22 herausgebildet.

Im Bereich der Lagerkante 21 bzw. 22 sind keine Schnitte vorhanden, d.h. in diesem Bereich sind die Lamellenteile 21a, 21b und 21c untereinander elastisch verbunden. Dasselbe gilt im Bereich der Lamelle 22 für die Lamellenteile 22a, 22b und 22c.

Die Ansteuerung der Lamellen 21 bzw. 22 in diesem Ausführungsbeispiel ist dieselbe wie die Ansteuerung in dem vorher beschriebenen Ausführungsbeispiel der Figuren 1 bis 4. Auch hier wird eine Stellwalze 3 verwendet, die jeweils mit einer der Lamellen 21 bzw. 22 drehbar verbunden ist.

Die einzelnen Lamellenabschnitte 21a, 21b und 21c der Lamelle 21 bzw. 22a, 22b und 22c der Lamelle 22 sind derart unterteilt, dass beim gegensinnigen Öffnen der Lamellen 21 bzw. 22 das Öffnungsverhältnis dieser Lamellenabschnitte zueinander, einer Fibonacci-Reihe entspricht. Dadurch lässt sich eine besonders effiziente Beeinflussung bzw. Steuerung des austretenden Luftstroms bei möglichst geringen Verlusten erreichen.

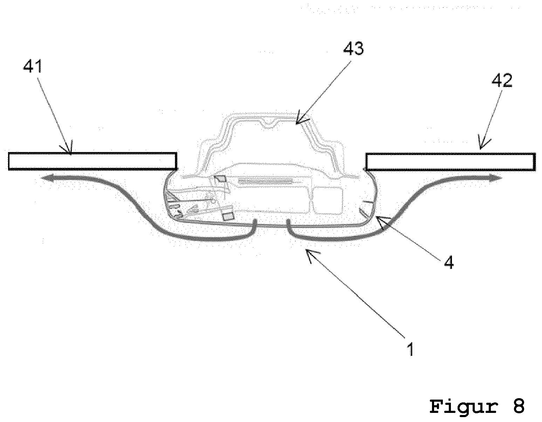

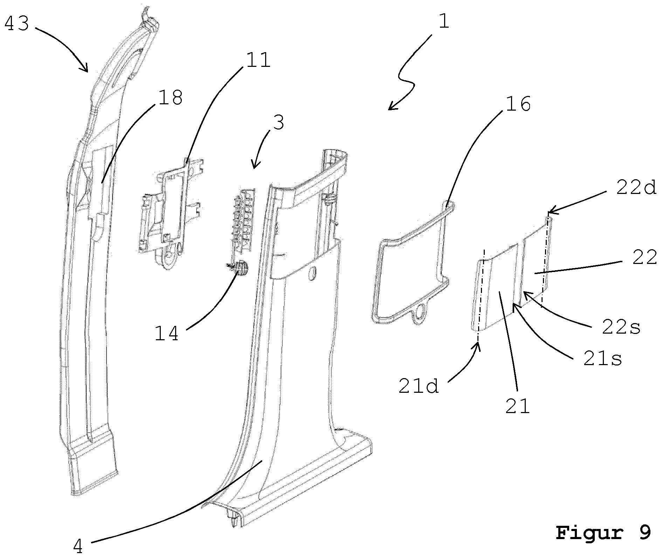

In den Figuren 8 und 9 ist ein Anwendungsbeispiel des erfindungsgemäßen Ausströmers an einer B-Säule 43 eines Kraftfahrzeugs gezeigt. In der Figur 8 ist ein Querschnitt durch die B-Säule dargestellt. Die Figur 9 zeigt eine Explosionsdarstellung im Bereich der B-Säule.

Wie aus Figur 8 ersichtlich ist, ist der Ausströmer 1 in einem Verkleidungsteil 4 aufgenommen, welches an der B-Säule 43 im Bereich zwischen zwei Fenstern 41 und 42 angeordnet ist. Wie anhand der Pfeile dargestellt ist, erfolgt der Luftaustritt aus dem Ausströmer 1 wahlweise in Richtung des ersten Fensters oder des zweiten Fensters derart, dass der Luftstrom entlang der konvexen Oberfläche des Verkleidungsteils 4 hin zu dem Fenster 41 bzw. 42 geführt wird. Wesentlich dabei ist, dass der erfindungsgemäße Ausströmer 1 auch im Bereich eines sehr flachen Luftaustrittswinkels eine effiziente Steuerung und Beeinflussung des Luftaustritts ermöglicht.

In der Figur 9 ist beispielhaft die Aufnahme des Ausströmers 1 in einem Verkleidungsteil 4 im Bereich der B-Säule 43 gezeigt. Im Bereich der B-Säule ist ein Luftkanal 18 vorgesehen, über den Luft von einer zentralen Luftförder- und/oder Heiz- und Klimaanlage hin zu dem Ausströmer 1 gefördert wird. Das Gehäuse 11 des Ausstömers 1 wird in den Luftkanal 18 eingesetzt bzw. mit diesem verbunden. In dem Gehäuse 11 ist, wie bei den vorherigen Beispielen beschrieben eine Betätigungsmechanik mit einer Stellwalze 3 gelagert, um die Lamellen 21 und 22 des Ausströmers 1 gegensinnig zu betätigen. Ein Abdeckrahmen 16 ist vorgesehen, um das Gehäuse 11 des Luftausströmers 1 in dem Verkleidungsteil 4 zu befestigen.

Die Lamellen 21 bzw. 22 sind in diesem Ausführungsbeispiel als starre Lamellen ausgebildet und weisen eine Form auf, die der Kontur des Verkleidungsteils 4 angepasst ist. In ihrem voneinander abgewandten Bereich weisen die Lamellen 21 und 22 jeweils eine Drehachse 21d bzw. 22d auf. Diese Drehachsen 21d bzw. 22d sind im Bereich der Lagerkanten der Lamellen 21 bzw. 22 abgeordnet, um diese mit dem Gehäuse 11 des Ausströmers 1 zu verbinden. Den Lagerkanten gegenüberliegend sind die frei beweglichen Schließkanten 21s bzw. 22s der Lamellen 21 bzw. 22 angeordnet. Über eine Öffnung in dem Abdeckrahmen 16 kann das Bedienrad bzw. die Handhabe 14 betätigt werden, um die Stellwalze 3 zu drehen und dadurch die Lamellen 21 und 22 zu öffnen bzw. zu schließen.

Wie aus der Figur 9 zu sehen ist, ermöglicht der erfindungsgemäße Ausströmer einen sehr flachen und kompakten Aufbau, sodass es möglich ist, diesen in der doch sehr flachen Verkleidung 4 der B-Säule 43 unterzubringen.

### Bezugszeichenliste

- 1: Ausströmer
- 11: Gehäuse
- 12: Ausströmeröffnung
- 13: Außenflächen
- 14: Handhabe, Bedienrad
- 15: Abdeckung
- 16: Blendrahmen
- 17: Gleitlager
- 18: Luftkanal
- 19: Lufteinlass

- 2: Lamellenanordnung
- 21: erste Lamelle
- 21a, b, c: Lamellenabschnitte
- 21d: erste Drehachse
- 21l: erste Lagerkante
- 21s: erste Schließkante

- 22: zweite Lamelle
- 22a, b, c: Lamellenabschnitte
- 22d: zweite Drehachse
- 22l: zweite Lagerkante
- 22s: zweite Schließkante

- 3: Stellglied, Stellwalze
- 31: erster Bügel
- 32: zweiter Bügel
- 33a: erster Steg
- 33b: zweiter Steg
- 34: Aufnahme für V-Lamelle
- 35: V-Lamelle
- 36: Betätigungselement

- 4: Verkleidungsteil
- 41: erstes Fenster
- 42: zweites Fenster
- 43: B-Säule

## Patentansprüche

1. Ausströmer (1) für ein Fahrzeug, insbesondere für einen Personenkraftwagen oder ein Nutzfahrzeug, mit einem an einen Luftkanal (18) anschließbaren Gehäuse (11), oder einem einen Abschnitt eines Luftkanals aufweisenden Gehäuse (11), und mit einer in dem Gehäuse (11) angeordneten Ausströmeröffnung (12) in deren Bereich wenigstens zwei bewegliche Lamellen (21, 22) zum Steuern eines Luftaustritts derart angeordnet sind, dass die Ausströmeröffnung (12) durch die wenigstens zwei beweglichen Lamellen (21, 22) in einer Verschlussstellung verschließbar ist und die wenigstens zwei beweglichen Lamellen (21, 22) jeweils eine mit dem Gehäuse (11) verbundene Lagerkante (21l, 22l) und eine frei bewegliche Schließkante (21s, 22s) aufweisen,dass die wenigstens zwei beweglichen Lamellen (21, 22) in der Ausströmeröffnung (12) derart angeordnet sind, dass deren Schließkanten (21s, 22s) in der Verschlussstellung einander gegenüberliegen, wobei die Schließkanten (21s, 22s) der wenigstens zwei beweglichen Lamellen (21, 22), ausgehend von der Verschlussstellung, in eine Öffnungsstellung gegenläufig angetrieben sind, und
dass die Schließkanten (21s, 22s) der wenigstens zwei beweglichen Lamellen (21, 22) über wenigstens ein Stellglied (3), welches mit den wenigstens zwei beweglichen Lamellen (21, 22) verbunden ist, gegenläufig beweglich ausgebildet sind, um eine Luftaustrittsrichtung und/oder einen Volumenstrom der ausströmenden Luft zu steuern,
**dadurch gekennzeichnet,**
**dass** das wenigstens eine Stellglied (3) mehrere Aufnahmen (34) zur drehbaren oder schwenkbaren Lagerung von mehreren V-Lamellen (35) aufweist, und
**dass** die mehreren V-Lamellen (35) parallel zueinander angeordnet und über ein gemeinsames Betätigungselement (36) untereinander verbunden sind, um diese gemeinsam zu schwenken.

2. Ausströmer nach Anspruch 1,
**dadurch gekennzeichnet,**
**dass** die Außenflächen der wenigstens zwei beweglichen Lamellen (21, 22) in der Verschlussstellung miteinander fluchten, vorzugsweise gemeinsam eine in der Verschlussstellung im Wesentlichen geschlossene Außenfläche (13) ausbilden.

3. Ausströmer nach Anspruch 1,
**dadurch gekennzeichnet,**
**dass** das wenigstens eine Stellglied (3) in einem Gleitlager (17) oder in mehreren Gleitlagern (17) des Gehäuses (11) drehbar gelagert ist, und dass das wenigstens eine Stellglied (3) mit den wenigstens zwei beweglichen Lamellen (21, 22) gelenkig verbunden ist.

4. Ausströmer nach einem der vorhergehenden Ansprüche, **dadurch gekennzeichnet,**
**dass** die wenigstens zwei beweglichen Lamellen (21, 22) als starre Lamellen (21, 22) ausgebildet sind, die im Bereich ihrer Lagerkante (21l, 22l) mit dem Gehäuse (11) drehbar verbunden sind, vorzugsweise dass die Lagerkante (21l, 22l) jeweils eine Drehachse (21d, 22d) der Lamelle (21, 22) ausbildet.

5. Ausströmer nach einem der Ansprüche 1 bis 3,
**dadurch gekennzeichnet,**
**dass** die wenigstens zwei beweglichen Lamellen (21, 22) als elastische und/oder biegsame Lamellen (21, 22) ausgebildet sind, die im Bereich ihrer Lagerkante (21l, 22l) mit dem Gehäuse (11) elastisch und/oder biegsam verbunden sind.

6. Ausströmer nach einem der vorhergehenden Ansprüche, **dadurch gekennzeichnet,**
**dass** die Lagerkanten (21l, 22l) der wenigstens zwei beweglichen Lamellen (21, 22) im Wesentlichen parallel zu den Schließkanten (21s, 22s) der wenigstens zwei beweglichen Lamellen (21, 22) verlaufen.

7. Ausströmer nach einem der vorhergehenden Ansprüche, **dadurch gekennzeichnet,**
**dass** eine Lamelle (21; 22) mehrere, durch Spalten oder Schnitte voneinander zumindest abschnittsweise getrennte Lamellenabschnitte (21a,b,c, 22a,b,c) aufweist, wobei die Lamellenabschnitte (21a,b,c, 22a,b,c) untereinander elastisch verbunden sind und/oder jeweils einzeln über das wenigstens eine Stellglied (3) betätigbar sind.

## Claims

1. Air vent (1) for a vehicle, particularly for a passenger motor vehicle or a utility vehicle, with a housing (11) connectible with an air channel (18) or a housing (11) having a section of an air channel, and with a vent opening (12) which is arranged in the housing (11) and in the region of which at least two movable slats (21, 22) for control of an air outflow are so arranged at the vent opening (12) is closable by the at least two movable slats (21, 22) in a closed setting, and the at least two movable slats (21, 22) each have a mounting edge (211, 221) connected with the housing (11) and a freely movable closing edge (21s, 22s), that the at least two movable slats (21, 22) are so arranged in the vent opening (12) that the closing edges (21s, 22s) thereof lie opposite one another in the closed setting, wherein the closing edges (21s, 22s) of the at least two movable slats (21, 22) starting from the closed setting are driven in opposite direction into an open setting, and that the closing edges (21s, 22s) of the at least two movable slats (21, 22) are configured to be movable in opposite direction by way of at least one setting element (3), which is connected with the at least two movable slats (21, 22), so as to control an air outflow direction and/or a volume flow of the outflowing air,
**characterised in that**
the at least one setting element (3) comprises a plurality of mounts (34) for rotatable or pivotable mounting of a plurality of V-shaped slats (35), and
the V-shaped slats (35) of the plurality are arranged parallel to one another and are interconnected by way of a common actuating element (36) so as to pivot these in common.

2. Air vent according to claim 1, **characterised in that** the outer surfaces of the at least two movable slats (21, 22) are aligned with one another in the closed setting, preferably to jointly form a substantially closed outer surface (13) in the closed setting.

3. Air vent according to claim 1, **characterised in that** the at least one setting element (3) is rotatably mounted in a slide bearing (17) or in a plurality of slide bearings (17) of the housing (11) and the at least one setting element (3) is pivotably connected with the at least two movable slats (21, 22).

4. Air vent according to any one of the preceding claims, **characterised in that** the at least two movable slats (21, 22) are constructed as rigid slats (21, 22) which in the region of the mounting edge (211, 221) thereof are rotatably connected with the housing (11), preferably **in that** the mounting edge (211, 221) forms a respective axis (21d, 22d) of rotation of the slat (21, 22).

5. Air vent according to any one of claims 1 to 3, **characterised in that** the at least two movable slats (21, 22) are constructed as resilient and/or flexible slats (21, 22) which in the region of the mounting edge (211, 221) thereof are resiliently and/or flexibly connected with the housing (11).

6. Air vent according to any one of the preceding claims, **characterised in that** the mounting edges (211, 221) of the at least two movable slats (21, 22) extend substantially parallel to the closing edges (21s, 22s) of the at least two movable slats (21, 22).

7. Air vent according to any one of the preceding claims, **characterised in that** a slat (21; 22) comprises a plurality of slat sections (21a,b,c, 22a,b,c) separated from one another at least in sections by gaps or cuts, wherein the slat sections (21a,b,c, 22a,b,c) are resiliently interconnected and/or are respectively individually actuable by way of the at least one setting element (3).

## Revendications

1. Diffuseur d'air pour un véhicule, notamment pour une voiture particulière ou un véhicule utilitaire, comprenant un boîtier (11) pouvant être raccordé à un conduit d'air (18), ou un boîtier (11) comportant une section d'un conduit d'air, et comprenant une ouverture du diffuseur (12) disposée dans le boîtier (11), dans la zone de laquelle au moins deux lamelles mobiles (21, 22) permettant de commander une sortie d'air sont disposées de sorte à pouvoir fermer l'ouverture du diffuseur d'air (12) par le biais des au moins deux lamelles mobiles (21, 22) dans une position de fermeture et que les au moins deux lamelles mobiles (21, 22) présentent respectivement un bord d'appui (211, 221) relié au boîtier (11) et un bord de fermeture (21s, 22s) librement mobile, en ce que les au moins deux lamelles mobiles (21, 22) sont disposées dans l'ouverture du diffuseur d'air (12) de sorte que leurs bords de fermeture (21s, 22s) sont l'un en face de l'autre dans la position de fermeture, lesdits bords de fermeture (21s, 22s) des au moins deux lamelles mobiles (21, 22) étant entraînés en sens inverse, à partir de la position de fermeture, dans une position d'ouverture, et en ce que les bords de fermeture (21s, 22s) des au moins deux lamelles mobiles (21, 22), par l'intermédiaire d'au moins un actionneur (3) qui est relié aux au moins deux lamelles mobiles (21, 22),
sont conçus de manière à être mobiles en sens inverse afin de commander une direction de sortie et/ou un débit volumique de l'air sortant,
**caractérisé en ce**
**que** l'au moins un actionneur (3) comporte plusieurs logements (34)
pour le montage rotatif ou pivotant de plusieurs lamelles en V (35), et
en ce que les plusieurs lamelles en V (35) sont disposées parallèlement les unes par rapport aux autres et sont reliées entre elles par un élément d'actionnement (36) commun afin de les faire pivoter ensemble.

2. Diffuseur d'air selon la revendication 1, **caractérisé en ce**
**que** les surfaces extérieures des au moins deux lamelles mobiles (21, 22) sont alignées entre elles dans la position de fermeture, de préférence qu'elles forment ensemble une surface extérieure (13) essentiellement fermée dans la position de fermeture.

3. Diffuseur d'air selon la revendication 1, **caractérisé en ce**
**que** l' au moins un actionneur (3) est monté dans un ou dans plusieurs paliers lisses (17) du boîtier (11) de manière à pouvoir tourner et en ce que l'au moins un actionneur (3) est relié de manière articulée
aux au moins deux lamelles mobiles (21, 22).

4. Diffuseur d'air selon l'une des revendications précédentes,
**caractérisé en ce**
**que** les au moins deux lamelles mobiles (21, 22) sont conçues comme des lamelles rigides qui, au niveau de leur bord d'appui (211, 221), sont reliées au boîtier (11) de manière à pouvoir tourner, de préférence en ce que le bord d'appui (211, 221) forme respectivement un axe de rotation (21d, 22d) de la lamelle (21, 22).

5. Diffuseur d'air selon l'une des revendications 1 à 3,
**caractérisé en ce**
**que** les au moins deux lamelles mobiles (21, 22) sont conçues comme des lamelles élastiques et/ou flexibles qui, au niveau de leur bord d'appui (211, 221), sont reliées au boîtier (11) de manière élastique et/ou flexible.

6. Diffuseur d'air selon l'une des revendications précédentes,
**caractérisé en ce**
**que** les bords d'appui (211, 221) des au moins deux lamelles mobiles (21, 22) sont essentiellement parallèles aux bords de fermeture (21s, 22s) des au moins deux lamelles mobiles (21, 22).

7. Diffuseur d'air selon l'une des revendications précédentes,
**caractérisé en ce**
**qu'**une lamelle (21, 22) comporte plusieurs sections de lamelles (21a, b, c, 22a, b, c) séparées les unes des autres par des fentes ou des coupes, où les sections de lamelles (21a, b, c, 22a, b, c) sont reliées de manière élastique entre elles et/ou peuvent être actionnées individuellement par l'au moins un actionneur (3).
